# EUROPEAN PATENT APPLICATION

(11) **EP 4 571 598 A1**
(43) Date of publication of application: **18.06.2025**
(21) Application number: 24212448.5
(22) Date of filing: 12.11.2024
(51) Int. Cl.: G06N 10/40, G06N 10/70

(54) **QUBIT DEVICE AND QUBIT DEVICE FABRICATION METHOD**

(30) Priority: 15.12.2023 JP 2023212550
(71) Applicant: Fujitsu Limited, Kawasaki-shi, Kanagawa 211-8588 (JP)
(72) Inventor: SHIMANOUCHI, Takeaki, Kanagawa, 211-8588 (JP); NAKAMURA, Yasunobu, Saitama, 351-0198 (JP)
(74) Representative: Haseltine Lake Kempner LLP

(57) **Abstract**

A quantum bit device that includes: a first qubit substrate; a second qubit substrate; and a first relay substrate provided between the first qubit substrate and the second qubit substrate, wherein: the first qubit substrate includes a first qubit, a first control electrode, and a first read-out electrode; the second qubit substrate includes a second qubit, a second control electrode, and a second read-out electrode; and the first relay substrate includes a first control line that is connected to the first control electrode, and transmits a control signal that controls the first qubit, a read-out line that is a line connected to both the first read-out electrode and the second read-out electrode, and that transmits a response signal indicating a state of the first qubit or the second qubit, a first access electrode connected to the control line, and a second access electrode connected to the read-out line.

## Description

### FIELD

The embodiments discussed herein are related to a qubit device and a qubit device fabrication method.

### BACKGROUND

The following technology is known as technology related to qubit devices. For example, a quantum chip includes a first substrate and a second substrate provided facing each other, with plural connectors connected between the first substrate and the second substrate. Qubits and first controllers coupled together into plural sets are provided on a surface of the first substrate facing the second substrate, and plural control signal transmission portions are provided on a surface of the second substrate facing the first substrate. Connectors connect the first controllers and the control signal transmission portions together one-to-one.

A system includes an ancillary qubit chip including plural ancillary qubits, and a data qubit chip including plural data qubits. This system includes an interposer including plural superconducting structure bodies coupled to the ancillary qubit chip and the data qubit chip.

### [Related Patent Documents]

Japanese Patent Application Laid-Open (JP-A) No. 2023-029561
JP-A No. 2022-537093

A qubit that employs a transmon is known as a qubit configuring a qubit device such as a quantum computing device or the like. A transmon has a configuration in which a superconducting Josephson device and a capacitor are connected together in parallel, and utilizes non-linear energy to perform quantum computing. In order to implement quantum computing using qubits, there is a need to input control signals to control the qubits, and a need to read a response signal indicating a qubit state. Namely, a qubit device needs to be provided with wiring lines that control signals are transmitted through and wiring lines that response signals are transmitted through. As the number of wiring lines increases accompanying the addition of more and more qubits, a need emerges to arrange the plural wiring lines in three dimensions, making the fabrication process thereof complicated, and also being a cause of crosstalk.

### SUMMARY

Accordingly, it is an object in one aspect of the embodiments to suppress the increase in the number of wiring lines accompanying the addition of more and more qubits.

According to an aspect of the embodiments, a quantum bit device includes: a first qubit substrate; a second qubit substrate; and a first relay substrate provided between the first qubit substrate and the second qubit substrate, wherein: the first qubit substrate includes a first qubit, a first control electrode, and a first read-out electrode; the second qubit substrate includes a second qubit, a second control electrode, and a second read-out electrode; and the first relay substrate includes a first control line that is connected to the first control electrode, and transmits a control signal that controls the first qubit, a read-out line that is a line connected to both the first read-out electrode and the second read-out electrode, and that transmits a response signal indicating a state of the first qubit or the second qubit, a first access electrode connected to the control line, and a second access electrode connected to the read-out line.

Technology disclosed herein enables the increase in number of wiring lines that accompanies a multi-bit configuration of qubits to be suppressed.

### BRIEF DESCRIPTION OF DRAWINGS

Fig. 1 is an equivalent circuit diagram illustrating an example of a configuration of a computation unit configuring a qubit device according to an exemplary embodiment of technology disclosed herein.
Fig. 2 is a plan view illustrating an example of a configuration of a qubit substrate according to an exemplary embodiment of technology disclosed herein.
Fig. 3 is a diagram illustrating an enlargement of a unit structure according to an exemplary embodiment of technology disclosed herein.
Fig. 4 is a diagram schematically illustrating a configuration of a qubit device according to an exemplary embodiment of technology disclosed herein.
Fig. 5A is a cross-section illustrating an example of a configuration of a qubit device according to an exemplary embodiment of technology disclosed herein.
Fig. 5B is a cross-section illustrating an example of a configuration of a qubit device according to an exemplary embodiment of technology disclosed herein.
Fig. 6A is a plan view illustrating an example of a configuration of a capacitor provided on a relay substrate in an exemplary embodiment of technology disclosed herein.
Fig. 6B is a plan view illustrating an example of a configuration of a capacitor provided on a relay substrate in an exemplary embodiment of technology disclosed herein.
Fig. 6C is a plan view illustrating an example of a configuration of a capacitor provided on a relay substrate in an exemplary embodiment of technology disclosed herein.
Fig. 7 is a plan view illustrating an example of a configuration of a capacitor provided on a relay substrate in an exemplary embodiment of technology disclosed herein.
Fig. 8 is a plan view illustrating an enlargement of part of Fig. 7.
Fig. 9 is a cross-section taken along line 9-9 of Fig. 8.
Fig. 10 is a cross-section taken along line 10-10 of Fig. 8.
Fig. 11A is a cross-section illustrating an example of a fabrication method of a qubit substrate according to an exemplary embodiment of technology disclosed herein.
Fig. 11B is a cross-section illustrating an example of a fabrication method of a qubit substrate according to an exemplary embodiment of technology disclosed herein.
Fig. 11C is a cross-section illustrating an example of a fabrication method of a qubit substrate according to an exemplary embodiment of technology disclosed herein.
Fig. 11D is a cross-section illustrating an example of a fabrication method of a qubit substrate according to an exemplary embodiment of technology disclosed herein.
Fig. 11E is a cross-section illustrating an example of a fabrication method of a qubit substrate according to an exemplary embodiment of technology disclosed herein.
Fig. 11F is a cross-section illustrating an example of a fabrication method of a qubit substrate according to an exemplary embodiment of technology disclosed herein.
Fig. 11G is a cross-section illustrating an example of a fabrication method of a qubit substrate according to an exemplary embodiment of technology disclosed herein.
Fig. 11H is a cross-section illustrating an example of a fabrication method of a qubit substrate according to an exemplary embodiment of technology disclosed herein.
Fig. 12 is a cross-section illustrating an example of a configuration of a qubit device according to an exemplary embodiment of technology disclosed herein.
Fig. 13A is a plan view illustrating an example of a layout of qubits and a read-out electrode.
Fig. 13B is a plan view illustrating an example of a layout of qubits and read-out electrodes.
Fig. 13C is a plan view illustrating an example of a layout of qubits and a read-out electrode.
Fig. 13D is a plan view illustrating an example of a layout of qubits and a read-out electrode.
Fig. 14 is a diagram schematically illustrating a configuration of a qubit device according to an exemplary embodiment of technology disclosed herein.
Fig. 15 is a diagram schematically illustrating a configuration of a qubit device according to an exemplary embodiment of technology disclosed herein.
Fig. 16 is a plan view illustrating an example of a configuration of a qubit device according to another exemplary embodiment of technology disclosed herein.
Fig. 17 is a cross-section taken along line 17-17 of Fig. 16.
Fig. 18A is a cross-section illustrating an example of a configuration of a qubit device according to another exemplary embodiment of technology disclosed herein.
Fig. 18B is a cross-section illustrating an example of a configuration of a qubit device according to another exemplary embodiment of technology disclosed herein.
Fig. 19A is a perspective view schematically illustrating a configuration of a qubit device according to another exemplary embodiment of technology disclosed herein.
Fig. 19B is a cross-section illustrating an example of a configuration of a qubit device according to another exemplary embodiment of technology disclosed herein.

### DESCRIPTION OF EMBODIMENTS

Description follows regarding an example of an exemplary embodiment of the disclosure, with reference to the drawings. Note that the same reference numerals will be appended across the drawings to the same or equivalent configuration elements and parts, and explanation thereof will be omitted.

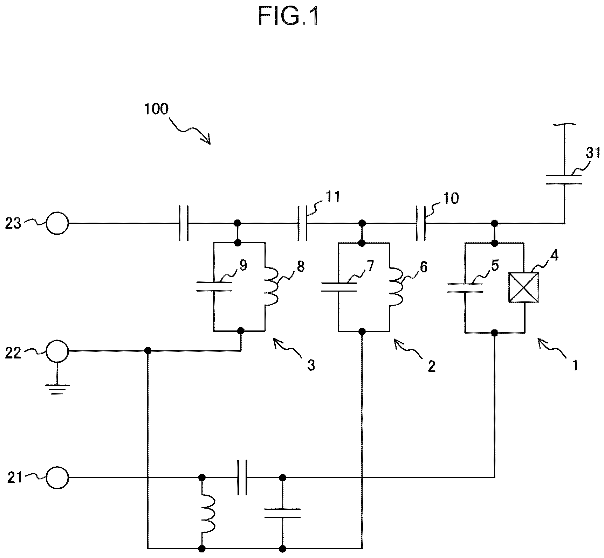

Fig. 1 is an equivalent circuit diagram illustrating an example of a configuration of a computation unit 100 configuring a qubit device according to an exemplary embodiment of technology disclosed herein. Plural of the computation units 100 are integrated into a qubit device. The computation units 100 each include a qubit 1, a resonator 2, and a filter 3.

The qubit 1 uses superconductivity to form a coherent two-level system and is an element that performs quantum computing utilizing non-linear energy. The qubit 1 includes a transmon qubit circuit configured by a superconducting Josephson device 4 and a capacitor 5 connected in parallel. The superconducting Josephson device 4 includes a pair of superconducting bodies that exhibit superconductivity at a temperature of a specific critical temperature or lower, with an ultrathin film insulating body having a thickness of the order of a few nm interposed between the pair of superconducting bodies. The superconducting body may, for example, be aluminum, and the insulating body may, for example, be an aluminum oxide.

The resonator 2 is connected to the qubit 1 through a capacitor 10. The resonator 2 reads a response signal indicating a state of the qubit 1 by interacting with the qubit 1. The resonator 2 includes a resonant circuit configured by a superconducting inductor 6 and a capacitor 7 connected in parallel. The filter 3 is connected to the resonator 2 via a capacitor 11. The filter 3 removes noise components contained in the response signal indicating the state of the qubit 1. The filter 3, similarly to the resonator 2, includes a resonant circuit configured by a superconducting inductor 8 and a capacitor 9 connected in parallel.

A control electrode 21, a ground electrode 22, and a read-out electrode 23 are connected to the computation unit 100. A control signal for controlling the qubit 1 is input to the control electrode 21. The quantum state of the qubit 1 is controlled by the control signal input to the control electrode 21. The response signal indicating the quantum state of the qubit 1 is read out from the read-out electrode 23. An external ground potential is applied to the ground electrode 22. The ground potential applied to the ground electrode 22 is supplied to each site of the computation unit 100.

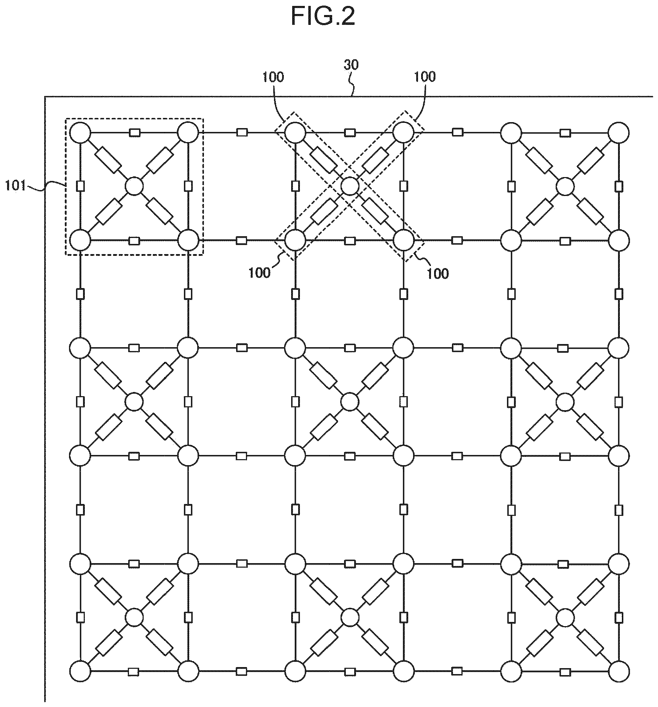

A qubit device includes a qubit substrate provided with plural computation units 100. Fig. 2 is a plan view illustrating an example of a configuration of a qubit substrate 30 configuring a qubit device according to an exemplary embodiment of technology disclosed herein. The qubit substrate 30 includes plural unit structures 101 that each include four of the computation units 100.

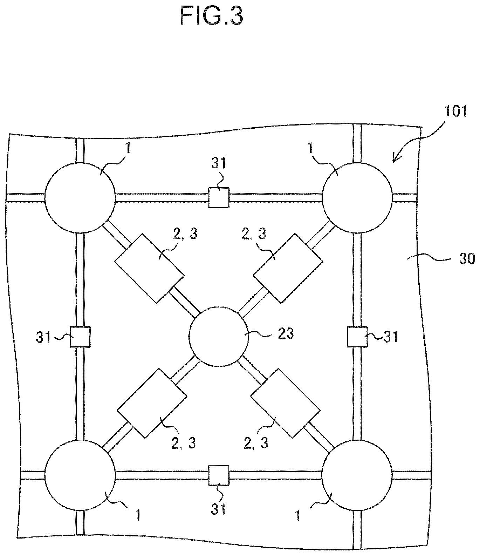

Fig. 3 is a diagram illustrating an enlargement of one of the plural unit structures 101 illustrated in Fig. 2. The four qubits 1 configuring a single unit structure 101 are arranged at positions corresponding to the four vertices of a square, and the read-out electrode 23 is arranged at a center of the square. The single read-out electrode 23 is shared by the four computation units 100. The resonator 2 and the filter 3 are provided on each of the paths from the four qubits 1 toward the read-out electrode 23. Each of the qubits 1 is connected to the other qubits 1 adjacent thereto through a capacitor 31. Each of the qubits thereby produces a quantum entangled state between itself and the other adjacent qubits 1 and performs quantum computation.

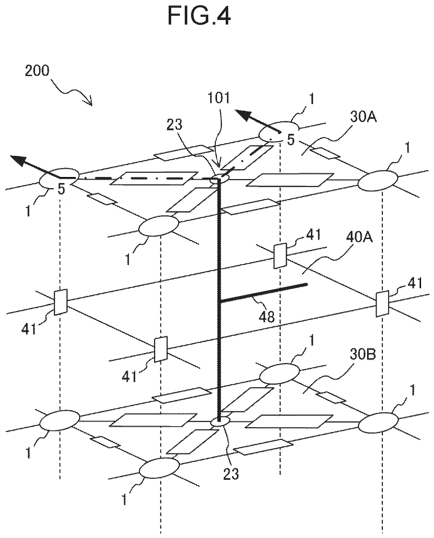

Fig. 4 is a perspective view schematically illustrating a configuration of a qubit device 200 according to an exemplary embodiment of technology disclosed herein. The qubit device 200 is configured by alternately stacking qubit substrates and a relay substrate. Fig. 4 illustrates a stacked configuration in which a relay substrate 40A has been interposed between qubit substrates 30A and 30B. From out of the qubits 1 provided to the qubit substrates 30A and 30B, the qubits 1 that are adjacent to each other in the stacking direction are connected through coupling elements 41 provided to the relay substrate 40A. The coupling elements 41 may be any configuration capable of electrically connecting upper and lower qubits together, and a capacitor, junction, induction coil, or the like may be employed therefor. Moreover, from out of the read-out electrodes 23 provided to the qubit substrates 30A and 30B, the read-out electrodes 23 that are adjacent to each other in the stacking direction are respectively connected by a read-out line 48 provided to the relay substrate 40A. Namely, a response signal read out from each of four respective qubits 1 included in the unit structure 101 provided to the qubit substrate 30A, and a response signal read out from each of four respective qubits 1 included in a unit structure 101 provided to the qubit substrate 30B, are multiplexed and transmitted through the single read-out line 48.

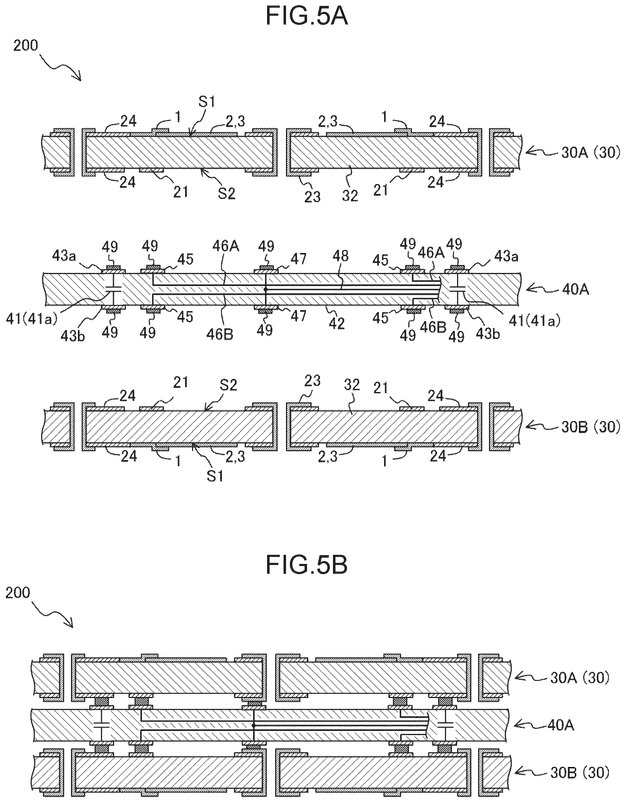

Fig. 5A and Fig. 5B are cross-sections illustrating an example of a configuration of the qubit device 200 according to an exemplary embodiment of technology disclosed herein. The cross-sections illustrated in fig. 5A and Fig. 5B correspond to cross-sections taken along line 5-5 of Fig. 4. Fig. 5A illustrates an exploded diagram of qubit substrates and a relay substrate, and Fig. 5B illustrates a joined state of the qubit substrates and the relay substrate.

Fig. 5A and Fig. 5B illustrate an example of a configuration including the two qubit substrates 30A and 30B and the single relay substrate 40A. The relay substrate 40A is provided between the qubit substrates 30A and 30B. Hereafter the qubit substrates 30A and 30B will be denoted as qubit substrates 30 when not discriminating therebetween or when referring to collectively.

The qubit substrates 30 each include, for example, a silicon substrate as a base material 32. The qubit 1, the resonator 2, and the filter 3 are provided on a first face S1 of the base material 32, and the control electrode 21 is provided on a second face S2 of the base material 32. The control electrode 21 is arranged directly below the qubit 1. A control signal input to the control electrode 21 acts on the qubit 1 through the base material 32.

The read-out electrode 23 has a through-penetration electrode structure penetrating through the base material 32. A response signal read from the qubit 1 through the resonator 2 and the filter 3 is led out to the second face S2 of the base material 32 by the read-out electrode 23 having the through-penetration electrode structure. Moreover, a connection electrode 24 electrically connected to the qubit 1 is provided in the vicinity of the qubit 1. Each of the connection electrodes 24 has a through-penetration electrode structure. A conduction path electrically connected to the qubit 1 is led out to the second face S2 of the base material 32 by the connection electrode 24 having the through-penetration electrode structure. Such an electrical connection may be direct connection, and may be indirect connection by inductive coupling, capacitive coupling, or the like.

Note that the qubit substrate 30A is an example of a "first qubit substrate" of technology disclosed herein. The qubit substrate 30B is an example of a "second qubit substrate" of technology disclosed herein. The qubits 1 provided to the qubit substrate 30A are examples of a "first qubit" of technology disclosed herein. The qubits 1 provided to the qubit substrate 30B are examples of a "second qubit" of technology disclosed herein. The control electrodes 21 provided to the qubit substrate 30A are examples of a "first control electrode" of technology disclosed herein. The control electrodes 21 provided to the qubit substrate 30B are examples of a "second control electrode" of technology disclosed herein. The read-out electrode 23 provided to the qubit substrate 30A is an example of a "first read-out electrode" of technology disclosed herein. The read-out electrode 23 provided to the qubit substrate 30B is an example of a "second read-out electrode" of technology disclosed herein.

The relay substrate 40A includes, for example, a Low Temperature Co-fired Ceramic (LTCC) or a High Temperature Co-fired Ceramic (HTCC) as the base material 42. The relay substrate 40A includes pairs of capacitor electrodes 43a and 43b provided at positions corresponding to the formation positions of the connection electrodes 24 of the qubit substrate 30. The capacitor electrodes 43a and 43b face each across the base material 42. The relay substrate 40A includes capacitors 41a that are examples of coupling elements 41 internally formed to the base material 42, with one end of the capacitor 41a connected to the capacitor electrode 43a, and with the other end of the capacitor 41a connected to the capacitor electrode 43b. Note that although in the present exemplary embodiment the capacitors 41a are employed as examples of the coupling elements 41, any configuration functioning as a coupling element may be employed therefor, and a junction, induction coil, or the like may be employed therefor.

The relay substrate 40A includes control line electrodes 45 provided at positions corresponding to the formation positions of the control electrodes 21 on the qubit substrates 30A and 30B, respectively. The relay substrate 40A includes control lines 46A and 46B internally formed to the base material 42. The control lines 46A and 46B are each connected to a respective control line electrode 45. The control lines 46A are connected to the control electrodes 21 of the qubit substrate 30A through the control line electrodes 45. Control signals for controlling the qubits 1 provided to the qubit substrate 30A are transmitted through the control lines 46A. The control lines 46B are connected to the control electrodes 21 of the qubit substrate 30B through the control line electrodes 45. Control signals for controlling the qubits 1 provided to the qubit substrate 30B are transmitted through the control lines 46B.

The relay substrate 40A includes a read-out line electrode 47 provided at a position corresponding to the formation positions of the read-out electrodes 23 of the qubit substrates 30A and 30B. The relay substrate 40A includes a read-out line 48 connected to the read-out line electrodes 47.

The qubit substrate 30A is stacked at a one face side of the relay substrate 40A, and the qubit substrate 30B is stacked at the other face side of the relay substrate 40A. The connection electrodes 24 of the qubit substrate 30A are joined to the capacitor electrodes 43a of the relay substrate 40A through bumps 49. The connection electrodes 24 of the qubit substrate 30B are joined to the capacitor electrodes 43b of the relay substrate 40A through bumps 49. The qubits 1 provided to the qubit substrate 30A and the qubits 1 provided to the qubit substrate 30B are, accordingly, respectively connected via the capacitors 41a provided to the relay substrate 40A.

The control electrodes 21 of the qubit substrate 30A are joined to the control line electrodes 45 of the relay substrate 40A through bumps 49. The control electrodes 21 of the qubit substrate 30A are accordingly connected to the control lines 46A provided to the relay substrate 40A. Similarly, the control electrodes 21 of the qubit substrate 30B are joined to the control line electrodes 45 of the relay substrate 40A through bumps 49. The control electrodes 21 of the qubit substrate 30B are accordingly connected to the control lines 46B provided to the relay substrate 40A.

The read-out electrode 23 of the qubit substrate 30A is joined to the read-out line electrode 47 of the relay substrate 40A through a bump 49. Similarly, the read-out electrode 23 of the qubit substrate 30B is joined to the read-out line electrode 47 of the relay substrate 40A through a bump 49. The read-out line 48 of the relay substrate 40A is accordingly connected to both the read-out electrode 23 of the qubit substrate 30A and the read-out electrode 23 of the qubit substrate 30B. Namely, the response signal indicating the state of the qubits 1 provided to the qubit substrate 30A, and the response signals indicating the state of the qubits 1 provided to the qubit substrate 30B, are both able to be read out from the read-out line 48. This means that the response signals respectively read out from the four qubits 1 contained in the unit structures 101 provided to the qubit substrate 30A, and the response signals respectively read out from the four qubits 1 contained in the unit structures 101 provided to the qubit substrate 30B, are multiplexed and transmitted through a single read-out line 48.

Note that the relay substrate 40A is an example of a "first relay substrate" of technology disclosed herein. The control lines 46A are examples of a "first control line" of technology disclosed herein. The control lines 46B are examples of a "second control line" of technology disclosed herein. The read-out line 48 is an example of a "read-out line" of technology disclosed herein.

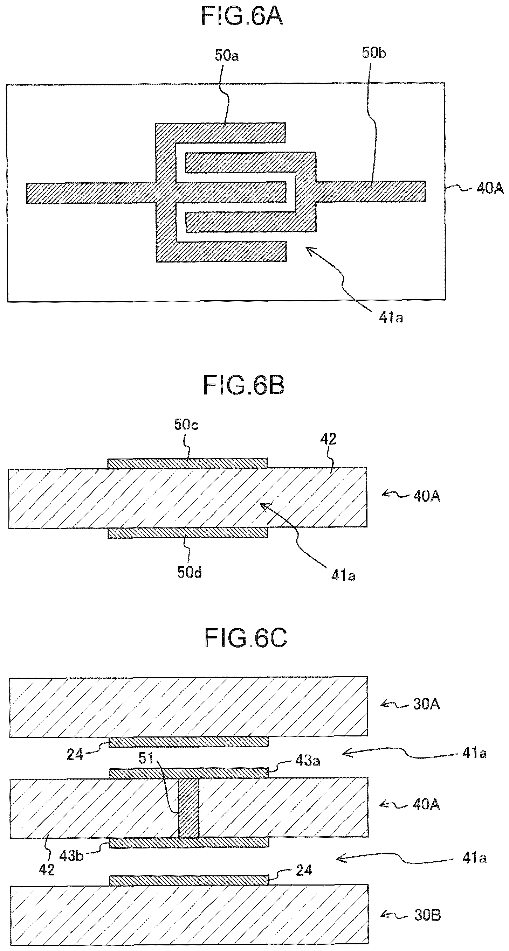

Fig. 6A is a plan view illustrating an example of a configuration of the capacitor 41a, that is an example of the coupling element 41 provided to the relay substrate 40A. The capacitor 41a may include a pair of conductors 50a and 50b provided separated by a spacing in the wiring layer inside the base material 42. A capacitor is formed by interposing the base material 42 that is an insulating body between the conductor 50a and the conductor 50b. The conductor 50a is connected to the capacitor electrode 43a through a via, and the conductor 50b is connected to the capacitor electrode 43b through a via. The conductors 50a and 50b may have a comb tooth shaped pattern as illustrated in Fig. 6A to secure an electrostatic capacitance of the capacitor 41a.

Fig. 6B is a cross-section illustrating an example of another configuration of the capacitor 41a provided to the relay substrate 40A. The capacitor 41a may include a conductor 50c provided to one face of the base material 42, and a conductor 50d provided at a position opposing the conductor 50c on the other face of the base material 42. A capacitor is formed by interposing the base material 42 that is an insulating body between the conductor 50c and the conductor 50d. The capacitor 41a having a large electrostatic capacitance even with a small surface area can be formed by employing the base material 42 having a large permittivity. Note that the conductor 50c may also serve as the capacitor electrode 43a, and the conductor 50d may also serve as the capacitor electrode 43b.

Fig. 6C is a cross-section is an example illustrating another configuration of the capacitor 41a. The capacitor 41a may be formed by providing respective gaps between the connection electrode 24 of the qubit substrate 30A and the capacitor electrode 43a of the relay substrate 40A, and between the connection electrode 24 of the qubit substrate 30B and the capacitor electrode 43b of the relay substrate 40A. In such cases, the capacitor electrodes 43a and 43b are electrically connected by a via 51 penetrating the base material 42. Charge of the capacitor 41a is suppressed from leaking by forming the capacitor 41a using a vacuum gap, enabling a high Q factor to be achieved. Note that to form gaps, spacers may be provided between the qubit substrates 30A and 30B, and the relay substrate 40A.

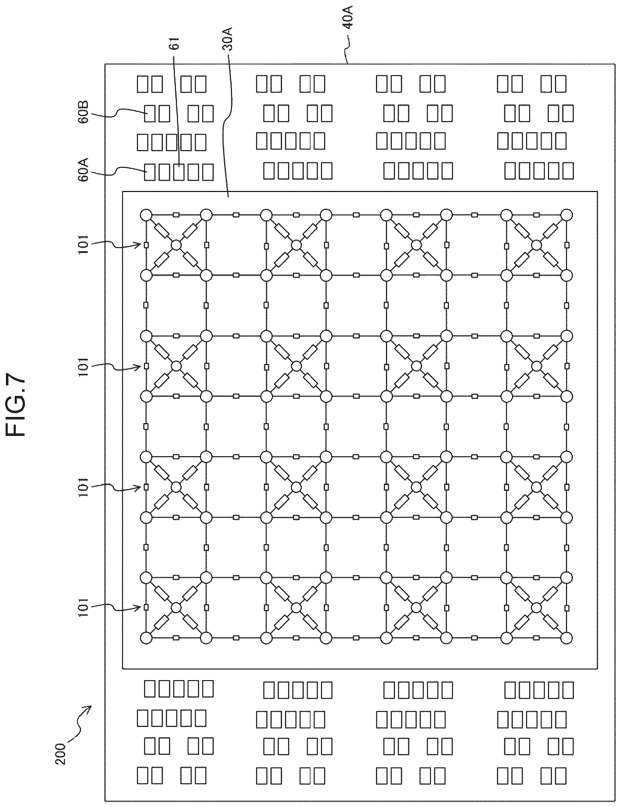

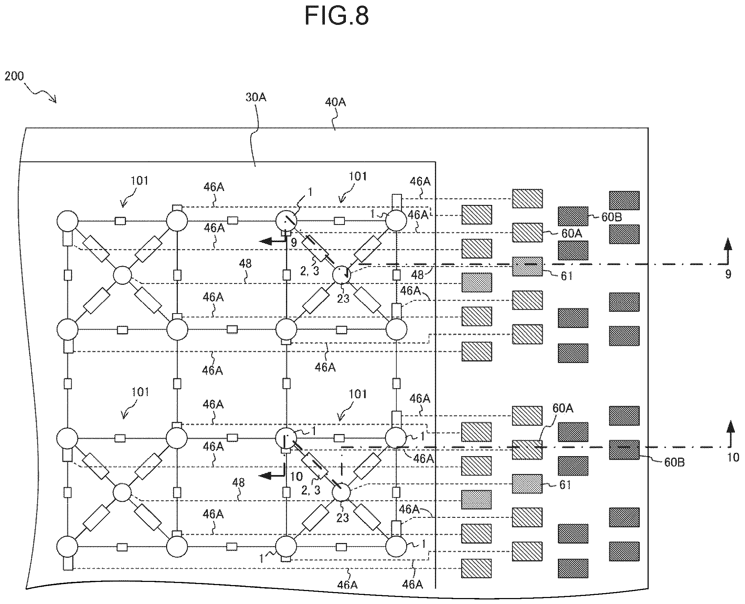

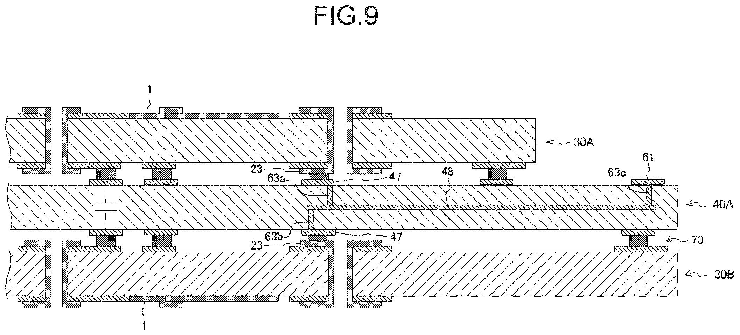

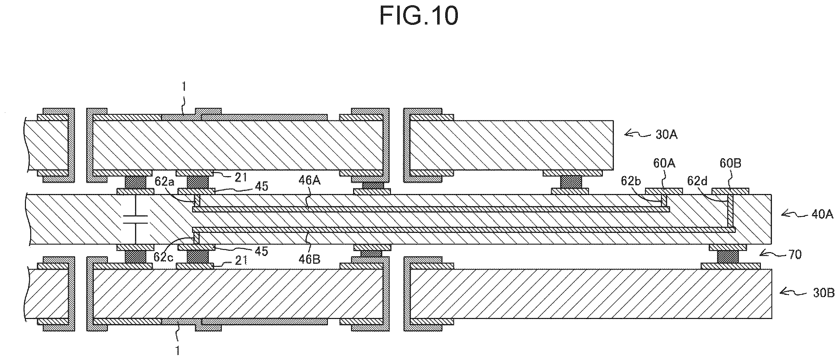

Fig. 7 is a plan view illustrating an example of a configuration of the qubit device 200. Fig. 8 is a plan view illustrating an enlargement of part of Fig. 7. Fig. 9 is a cross-section taken along line 9-9 in Fig. 8. Fig. 10 is a cross-section taken along line 10-10 in Fig. 8.

The size of the relay substrate 40A is larger than the qubit substrate 30A. This means that the relay substrate 40A includes a portion protruding further outside than the outer edge of the qubit substrate 30A in the in-plane direction. The size of the qubit substrate 30B is substantially the same as the relay substrate 40A.

The control lines 46A, 46B and the read-out lines 48 provided in the interior of the relay substrate 40A respectively extend to the portion of the relay substrate 40A protruding further outside than the outer edge of the qubit substrate 30A in the in-plane direction. Plural input electrodes 60A, 60B and plural output electrodes 61 are provided to the surface of the protruding portion of the relay substrate 40A. The plural input electrodes 60A respectively correspond to the control lines 46A, and the plural input electrodes 60B respectively correspond to the control lines 46B. The plural output electrodes 61 respectively correspond to the read-out lines 48. As illustrated in Fig. 9, one end of each of the read-out lines 48 is connected to the corresponding read-out line electrodes 47 through vias 63a, 63b, and the other end thereof is connected to the corresponding output electrode 61 through a via 63c. As illustrated in Fig. 10, one end of each of the control lines 46A is connected to the corresponding control line electrode 45 through a via 62a, and the other end thereof is connected to the corresponding input electrode 60A through a via 62b. One end of the control line 46B is connected to the corresponding control line electrode 45 through a via 62c, and the other end thereof is connected to the corresponding input electrode 60B through a via 62d.

The control signals to control the qubits 1 provided to the qubit substrate 30A are input to the input electrodes 60A. The control signals input to the input electrodes 60A are supplied via the control lines 46A to the control electrodes 21 provided to the qubit substrate 30A. Similarly, the control signals to control the qubits 1 provided to the qubit substrate 30B are input to the input electrodes 60B. The control signals input to the input electrodes 60B are supplied to the control electrodes 21 provided to the qubit substrate 30B through the control lines 46B. The response signals indicating the state of the qubits 1 respectively provided to the qubit substrates 30A and 30B are output from the output electrodes 61 via the read-out lines 48 provided to the relay substrate 40A.

This thereby enables access to the qubits 1 respectively provided to the qubit substrates 30A and 30B through the input electrodes 60A, 60B and the output electrodes 61 provided to the relay substrate 40A. External access to the qubits 1 provided to the qubit substrates 30A and 30B is facilitated due to providing the input electrodes 60A, 60B and the output electrodes 61 at the portion of the relay substrate 40A protruding further outside than the outer edge of the qubit substrate 30A in the in-plane direction.

The relay substrate 40A and the qubit substrate 30B are joined together through a dummy join portion 70 at portions thereof protruding further outside than the outer edge of the qubit substrate 30A in the in-plane direction. The dummy join portion 70 is employed with the objective of mechanically connecting between substrates, and is a join portion that does not form an electrical connection. This thereby enables suppression of a risk of a drop in inter-substrate connection performance, or damage to the join portion, due to flexing of each substrate.

As long as the input electrodes 60A, 60B and the output electrodes 61 are provided to the portion of the relay substrate 40A protruding further outside than the outer edge of the qubit substrate 30A in the in-plane direction, the arrangement of these electrodes may be determined as appropriate. Note that the input electrodes 60A are examples of a "first access electrode" of technology disclosed herein. The output electrodes 61 are examples of a "second access electrode" of technology disclosed herein.

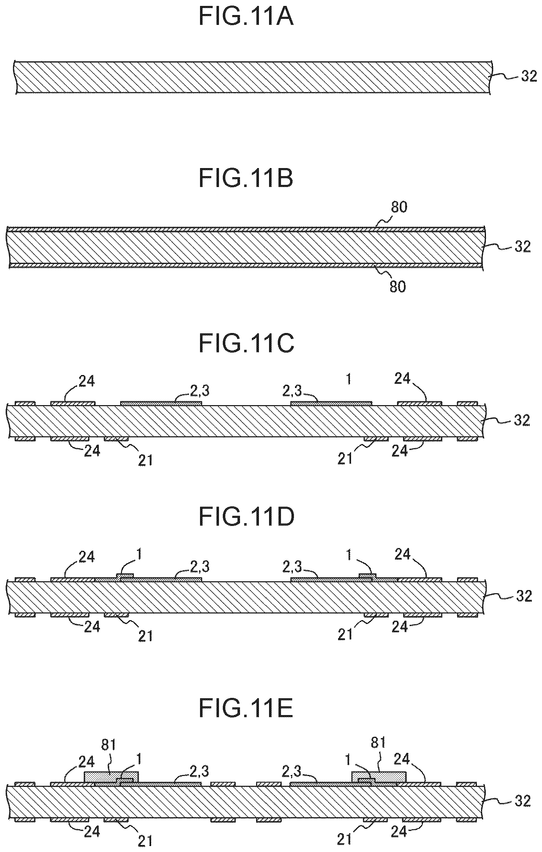

Description follows regarding a fabrication method of the qubit device 200. Fig. 11A to Fig. 11H are cross-sections illustrating an example of a fabrication method of the qubit substrate 30. First, the base material 32 of the qubit substrate 30 is prepared. A silicon substrate having a thickness of about 300 µm may, for example, be employed as the base material 32 (Fig. 11A). Next, for example, a conductive film 80 of a thickness of about 100 nm is formed on each side of the base material 32a by a sputtering method, plasma chemical vapor deposition (CVD), or an ion plating method. TiN may, for example, be employed as the material of the conductive film 80 (Fig. 11B). Next, resist masks are formed on the surfaces of the conductive films 80, and patterning of the conductive films 80 is performed by localized etching of the conductive films 80 through the resist masks. The resonator 2, the filter 3, the control electrodes 21, and the connection electrode 24 are formed thereby (Fig. 11C).

Next, the qubits 1 are formed on the surface of the base material 32 (Fig. 11D). A superconducting Josephson device configuring the qubits 1 is, for example, formed by a process of forming a first electrode containing aluminum on the surface of the base material 32 using a vapor deposition method, a process of forming an ultrathin oxide film of a thickness of several nm on a surface of the first electrode using O₂ gas, and a process of forming a second electrode containing aluminum on the surface of the oxide film using a vapor deposition method. The patterning of the first electrode and the second electrode may, for example, be performed by a lift-off method using a patterned resist mask. In such cases, an opening pattern of the resist mask may be a cross shape including a first straight line portion along a first direction, and a second straight line portion along a second direction orthogonal to the first direction, with the first electrode formed at a portion corresponding to the first straight line portion by vapor deposition performed while tilted with the first direction as a rotation axis. Subsequently, the second electrode may be formed at a portion corresponding to the second straight line portion by vapor deposition performed while tilted with the second direction as a rotation axis. Such a method enables patterning of both the first electrode and the second electrode to be performed using a single resist mask.

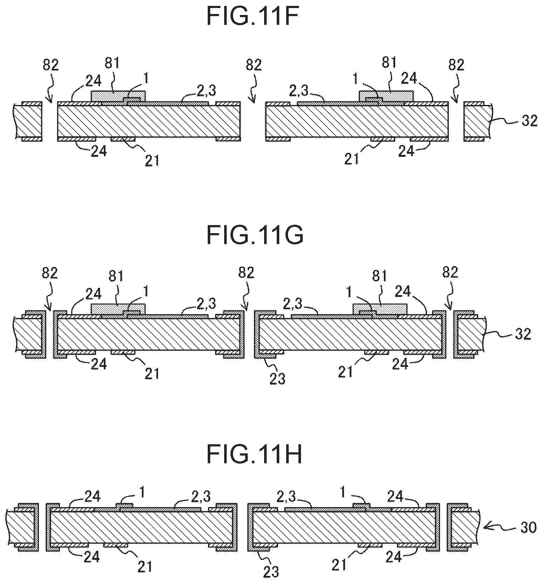

Next, a protection film 81 covering the surface of the qubits 1 is, for example, formed by a CVD method. SiO₂ may, for example, be employed as the material of the protection film 81. Subsequently, patterning of the protection film 81 is performed using photolithographic technology (Fig. 11E). Next, through holes 82 are respectively formed at the formation positions of the connection electrodes 24 on the base material 32 and at the formation positions of the read-out electrode 23 on the base material 32 using, for example, a Deep-Reactive Ion Etching (RIE) method (Fig. 11F). Next, a conductive film covering the inner wall of the through holes 82 and the periphery of opening edges of the through holes 82 is formed using, for example, a vapor deposition method. Aluminum may, for example, be employed as the material of the conductive film. Subsequently, patterning of the conductive film is performed using a lift-off method, for example. The read-out electrodes 23 are accordingly formed thereby (Fig. 11G). Next, the protection film 81 covering the qubits 1 is removed by, for example, etching using hydrofluoric acid vapor (Fig. 11H). The qubit substrate 30 is completed by through the processes described above.

The relay substrate 40A may be produced using, for example, a known LTCC multilayer substrate fabrication process. Details regarding the fabrication method of the relay substrate 40A are omitted from explanation.

Next, description follows regarding joining the qubit substrates 30A and 30B to the relay substrate 40A, with reference to Fig. 5A and Fig. 5B. The bumps 49 are respectively formed on the surfaces of the capacitor electrodes 43a, 43b of the relay substrate 40A, the control line electrode 45, and the read-out line electrodes 47. Indium may, for example, be employed as the material of the bumps 49. The bumps 49 are, for example, patterned using a lift-off method.

Next, the qubit substrate 30A and the relay substrate 40A are joined together through the bumps 49, and also the qubit substrate 30B and the relay substrate 40A are joined together through the bumps 49. More specifically, the connection electrodes 24 of the qubit substrate 30A and the capacitor electrodes 43a of the relay substrate 40A, the control electrodes 21 of the qubit substrate 30A and the control line electrode 45 of the relay substrate 40A, and the read-out electrode 23 of the qubit substrate 30A and the read-out line electrodes 47 of the relay substrate 40A, are each respectively joined together through the bumps 49. The qubit substrate 30A and the relay substrate 40A are accordingly joined together thereby. Next, the connection electrodes 24 of the qubit substrate 30B and the capacitor electrode 43b of the relay substrate 40A are joined together through the respective bumps 49, the control electrodes 21 of the qubit substrate 30B and the control line electrode 45 of the relay substrate 40A are joined together through the respective bumps 49, and the read-out electrode 23 of the qubit substrate 30B and the read-out line electrodes 47 of the relay substrate 40A are joined together through the respective bumps 49. The qubit substrate 30B and the relay substrate 40A are accordingly joined together thereby. The control electrodes 21 of the qubit substrate 30A are connected to the control lines 46A of the relay substrate 40A, and the control electrodes 21 of the qubit substrate 30B are connected to the control lines 46B of the relay substrate 40A. The respective read-out electrodes 23 of the qubit substrates 30A and 30B are connected to the common read-out line 48 of the relay substrate 40A. The qubits 1 provided to the qubit substrate 30A, and the qubits 1 provided to the qubit substrate 30B, are connected together through the capacitors 41a provided to the relay substrate 40A.

Inter-electrode joining of the qubit substrates 30A and 30B to the relay substrate 40A may, for example, employ an ultrasonic bonding method. Note that adjacent substrates may be joined together all at once in a state in which the relay substrate 40A has been interposed between the qubit substrates 30A and qubit substrate 30B.

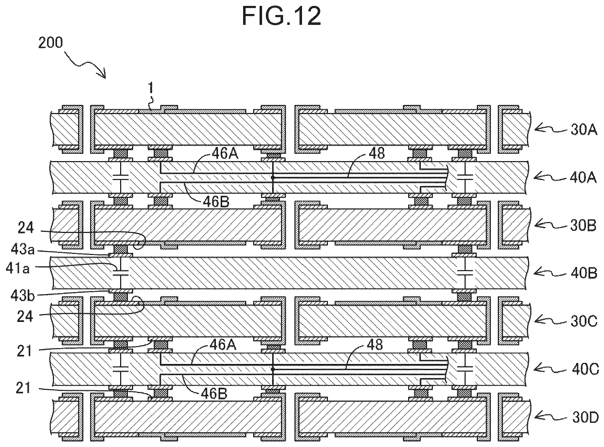

Fig. 12 is a cross-section illustrating an example of a configuration of a qubit device 200 in which the number of stacked layers of qubit substrate has been increased. Fig. 12 illustrates an example of a configuration containing four qubit substrates 30A, 30B, 30C, 30D, with relay substrates 40A, 40B, 40C respectively provided between these qubit substrates.

The relay substrate 40C is similar to the relay substrate 40A, and includes control lines 46A, 46B and read-out lines 48. The control lines 46A of the relay substrate 40C are connected to the control electrodes 21 of the qubit substrate 30C, and the control line 46B of the relay substrate 40C are connected to the control electrodes 21 of the qubit substrate 30D. The respective read-out lines 48 of the relay substrate 40C are connected to both a read-out electrode 23 of the qubit substrate 30C and to a read-out electrode 23 of the qubit substrate 30D.

The relay substrate 40B is employed to join a first set, which is configured from the qubit substrate 30A, the relay substrate 40A, and the qubit substrate 30B, and a second set, which is configured from the qubit substrate 30C, the relay substrate 40C, and the qubit substrate 30D, together. The relay substrate 40B includes the capacitor electrodes 43a, 43b. The capacitor electrodes 43a of the relay substrate 40B are connected to the connection electrodes 24 of the qubit substrate 30B. The capacitor electrodes 43b of the relay substrate 40B are connected to the connection electrodes 24 of the qubit substrate 30C. This means that, from out of the qubits 1 provided to the qubit substrates 30B and 30C, the qubits 1 that are adjacent in the stacking direction are connected together through the capacitors 41a provided to the relay substrate 40B.

In this manner, the qubit device 200 according to an exemplary embodiment of technology disclosed herein includes the qubit substrate 30A, the qubit substrate 30B, and the relay substrate 40A provided between these substrates. The qubit substrates 30A and 30B include the respective qubits 1, control electrodes 21, and read-out electrodes 23. The relay substrate 40A includes the control lines 46A through which control signals to control the qubits 1 provided to the qubit substrate 30A are transmitted. The relay substrate 40A includes the read-out lines 48 connected to both the read-out electrode 23 of the qubit substrate 30A and the read-out electrode 23 of the qubit substrate 30B. The relay substrate 40A includes the input electrodes 60A, 60B that are respectively connected to the control lines 46A and 46B, and the output electrodes 61 that are connected to the read-out lines 48.

In the qubit device 200 according to technology disclosed herein, the response signal indicating the state of a qubit 1 provided to the qubit substrate 30A, and the response signal indicating the state of a qubit 1 provided to the qubit substrate 30B, are multiplexed and transmitted through a single read-out line 48. This thereby enables the number of wiring lines to be suppressed from increasing accompanying the addition of more and more qubits.

Moreover, the relay substrate 40A includes the capacitors 41a for forming capacitive coupling between the qubits 1 provided to the qubit substrate 30A and the qubits 1 provided to the qubit substrate 30B. The qubits 1 provided to the mutually different qubit substrates 30A, 30B are connected together through the capacitors 41a provided to the relay substrate 40A. Namely, the qubits provided to each of the qubit substrates are not only connected to other qubits adjacent in the qubit substrate in-plane direction, but also connected to other qubits adjacent in the substrate stacking direction through the capacitors. This thereby enables a configuration to be achieved in which more and more qubits are added without being limited by the layout of the qubit substrates. As a result thereof, the number of combinations of qubit gates configured including plural qubits can be increased, enabling an improvement in computational performance to be achieved in a qubit device.

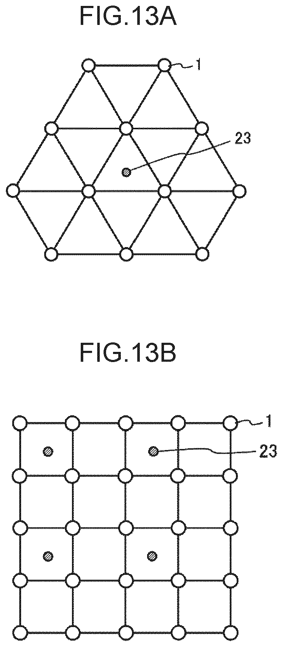

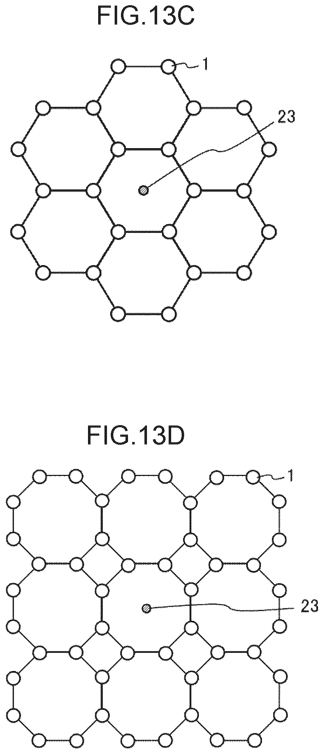

Figs. 13A, 13B, 13C, and 13D are plan views indicating examples of layouts of the qubits 1 and the read-out electrodes 23 for qubits arranged in a flat plane. Fig. 13A illustrates a layout in which qubits 1 are arranged at each vertex of triangles, and a read-out electrode 23 is arranged at a center of a triangle. This layout has an order of 6, and a multiplicity of 3. Fig. 13B illustrates a layout in which qubits 1 are arranged at each vertex of squares, and read-out electrodes 23 are arranged at centers of squares. This layout has an order of 4, and a multiplicity of 4. Fig. 13C illustrates a layout in which qubits 1 are arranged at each vertex of hexagons, and a read-out electrode 23 is arranged at a center of the hexagon. This layout has an order of 3, and a multiplicity of 6. Fig. 13D illustrates a layout in which qubits 1 are arranged at each vertex of octagons, and a read-out electrode 23 is arranged at a center of an octagon. This layout has an order of 3, and a multiplicity of 8.

The order is the number of other qubits coupled to a single qubit. As the order increases, the number of quantum gates that can be formed with a single qubit as the origin increases. The multiplicity is the number of qubits connected to a single read-out line. Increasing the multiplicity enables the number of read-out lines to be suppressed. The number of qubits surrounding a read-out electrode 23 is the multiplicity when the qubits are arranged in a flat plane. There is a tendency for the order to be smaller as the multiplicity is larger. Namely, it is difficult to have both a large order and a large multiplicity when the qubits 1 are arranged in a flat plane.

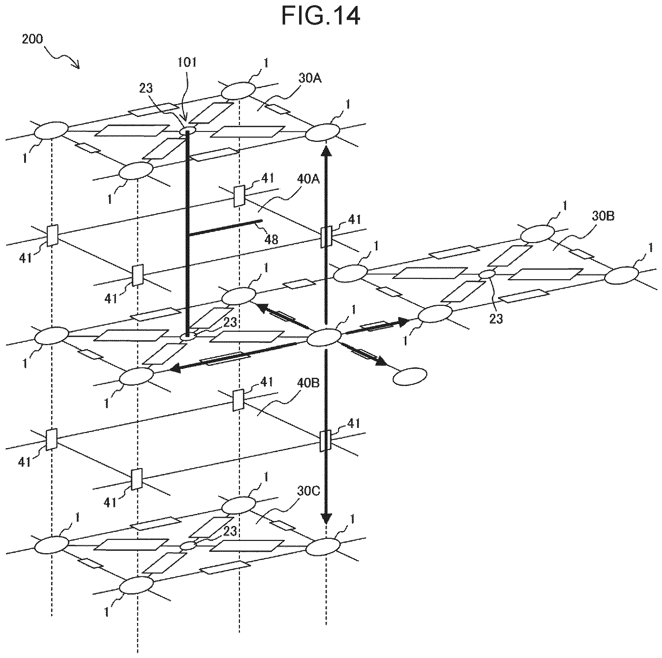

However, in the qubit device 200 according to an exemplary embodiment of technology disclosed herein, as illustrated in Fig. 14, an order of 6 and a multiplicity of 8 can be achieved, enabling both a large order and a large multiplicity. However, in the present disclosure the above and below qubits are not necessarily connected through coupling elements of a relay substrate and, as in another exemplary embodiment described later, a structure having an order of 4 and a multiplicity of 8 may be adopted.

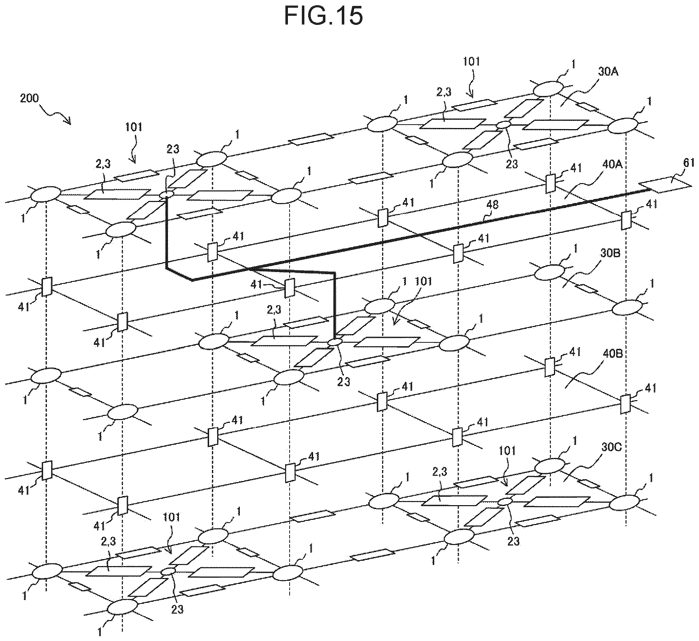

Fig. 15 is a diagram illustrating an example of a relationship of an arrangement of unit structures 101 formed on each qubit substrate. As illustrated in Fig. 15, the unit structures 101 may be arranged at positions shifted with respect to each other in the in-plane direction in qubit substrates mutually adjacent to each other on each side of the relay substrate. Fig. 15 illustrates an example of a configuration in which the unit structures 101 provided to the qubit substrate 30B are arranged at positions shifted in the in-plane direction with respect to the unit structures 101 respectively provided in the qubit substrates 30A, 30C. This means that the positions of the resonator 2, the filter 3, and the read-out electrode 23 are also respectively shifted between the qubit substrates adjacent to each other on either side of a relay substrate, thereby enabling crosstalk to be suppressed.

In such cases, preferably respective wiring line lengths from read-out electrodes 23 connected to a common read-out line 48 to a given output electrode 61 are preferably the same. In the example illustrated in Fig. 15, the respective wiring line lengths are configured so as to be equivalent to each other from the read-out electrodes 23 respectively provided to the qubit substrates 30A and 30B, to the output electrode 61 via a common read-out line 48. This thereby enables the attenuation and phase of each of the response signals read out from each of the qubits 1 to be aligned.

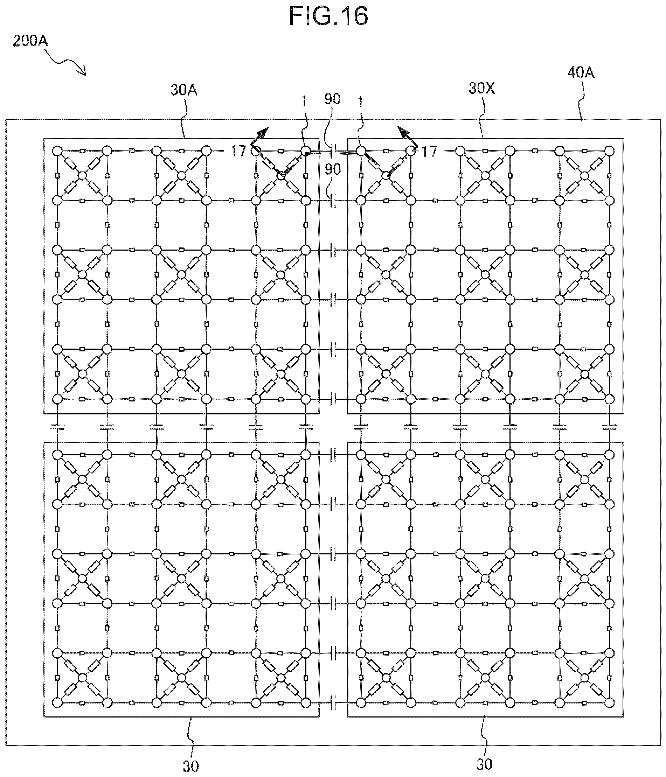

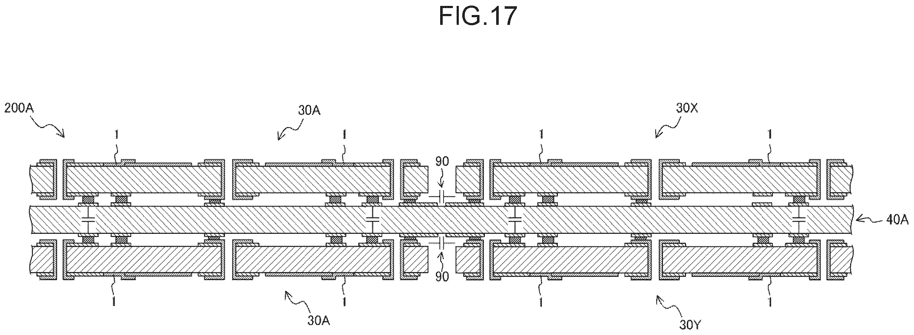

Fig. 16 is a plan view illustrating a configuration of a qubit device 200A according to another exemplary embodiment of technology disclosed herein. Fig. 17 is a cross-section taken along line 17-17 in Fig. 16. Read-out lines and control lines provided to the relay substrate 40A are omitted in Fig. 17. The qubit device 200A includes plural qubit substrates 30 including qubit substrates 30A and 30X provided on one face side of a relay substrate 40A. Moreover, a qubit device 200B includes plural qubit substrates 30 including qubit substrates 30B and 30Y provided on the other face side of the relay substrate 40A.

The relay substrate 40A includes plural capacitors 90 provided on the one face and the other face thereof. Capacitive coupling between qubits provided on mutually different qubit substrates mounted to the same face of the relay substrate 40A is formed by the respective capacitors 90. For example, capacitive coupling between the qubits 1 respectively provided to the qubit substrates 30A and 30X is formed by the capacitor 90 provided on the one face of the relay substrate 40A. Capacitive coupling between the qubits 1 respectively provided to the qubit substrates 30B and 30Y is also formed by the capacitor 90 provided on the other face of the relay substrate 40A. In the qubit device 200B according to the present exemplary embodiment, plural qubit substrates 30 are arranged side-by-side on a single relay substrate 40A, enabling the number of bits to be increased even more.

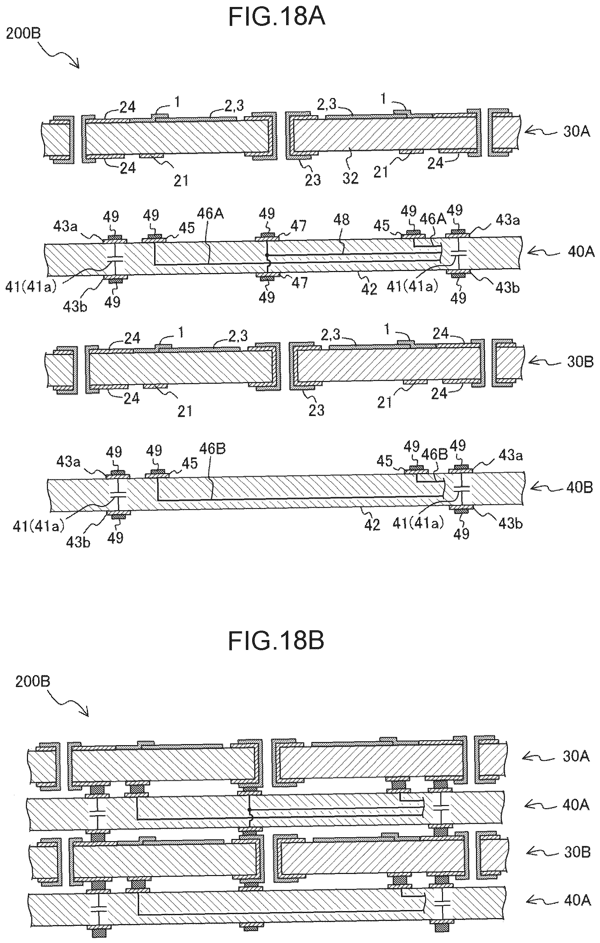

Fig. 18A and Fig. 18B are cross-sections illustrating an example of a configuration of a qubit device 200B according to another exemplary embodiment of technology disclosed herein. Fig. 18A is an exploded diagram illustrating qubit substrates and relay substrates, and Fig. 18B illustrates a joined state of the qubit substrates and the relay substrates. The qubit device 200B includes qubit substrates 30A, 30B and relay substrates 40A, 40B. The relay substrate 40A is provided between the qubit substrate 30A and the qubit substrate 30B, and the qubit substrate 30B is provided between the relay substrate 40A and the relay substrate 40B.

In the qubit device 200 illustrated in Fig. 5A and Fig. 5B, both the control lines 46A connected to the control electrodes 21 of the qubit substrate 30A and the control lines 46B connected to the control electrodes 21 of the qubit substrate 30B are provided to the relay substrate 40A. However, in the qubit device 200B according to the present exemplary embodiment, control lines 46A are provided to the relay substrate 40A, and control lines 46B are provided to the relay substrate 40B. In this manner, the control lines 46A, 46B connected to the control electrodes 21 of the mutually different qubit substrates 30A, 30B are arranged distributed across the mutually different relay substrates 40A, 40B, enabling the wiring density of a single relay substrate to be suppressed, and enabling easy design and fabrication of the relay substrates. Note that the relay substrate 40B is an example of a "second relay substrate" of technology disclosed herein.

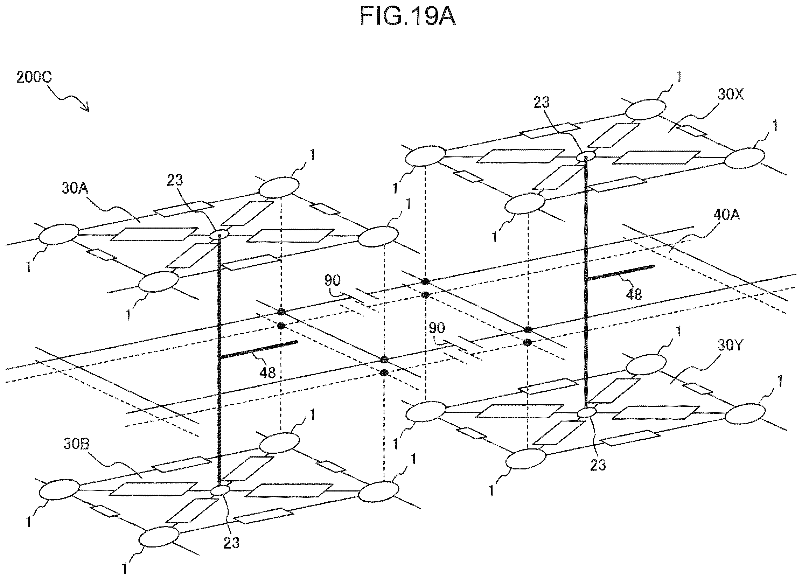

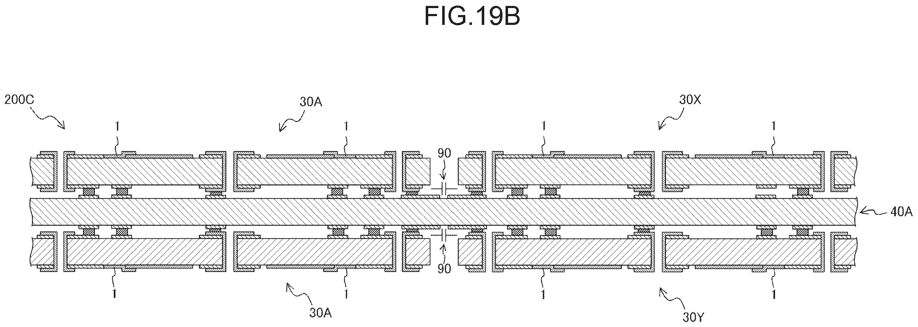

Fig. 19A is a perspective view schematically illustrating a configuration of a qubit device 200C according to another exemplary embodiment of technology disclosed herein, and Fig. 19B is a cross-section of the qubit device 200C. The read-out lines and control lines provided to the relay substrate 40A are omitted in Fig. 19B. The qubit device 200C differs from the qubit device 200A described above (see Fig. 16, Fig. 17) in not including coupling elements for connecting qubits adjacent in the stacking direction together. The qubit device 200C enables an order of 4 and a multiplicity of 8 to be achieved, enabling the multiplicity alone to be increased, rather than an increase in both order and multiplicity.

## Claims

1. A quantum bit device (200) comprising:
a first qubit substrate (30A);
a second qubit substrate (30B); and
a first relay substrate (40A) provided between the first qubit substrate (30A) and the second qubit substrate (30B), wherein:
the first qubit substrate (30A) includes a first qubit (1), a first control electrode (21), and a first read-out electrode (23);
the second qubit substrate (30B) includes a second qubit (1), a second control electrode (21), and a second read-out electrode (23); and
the first relay substrate (40A) includes
a first control line (46A) that is connected to the first control electrode (21), and transmits a control signal that controls the first qubit (1),
a read-out line (48) that is a line connected to both the first read-out electrode (23) and the second read-out electrode (23), and that transmits a response signal indicating a state of the first qubit (1) or the second qubit (2),
a first access electrode (60A) connected to the control line (46A), and
a second access electrode (61) connected to the read-out line (48).

2. The qubit device of claim 1, wherein:
the first relay substrate (40A) includes a capacitor (41) to capacitive couple the first qubit (1) and the second qubit (1) together.

3. The qubit device of claim 1 or claim 2, wherein:
a size of the first relay substrate (40A) is larger than a size of the first qubit substrate (30A).

4. The qubit device of claim 3, wherein:
the first access electrode (60A) and the second access electrode (61) are provided to a portion of the first relay substrate (40A) that protrudes further outside than an outer edge of the first qubit substrate (30A) in an in-plane direction.

5. The qubit device of any one of claim 1 to claim 4, wherein:
the first read-out electrode (23) and the second read-out electrode (23) are arranged at positions shifted from each other in an in-plane direction.

6. The qubit device of any one of claim 1 to claim 5, wherein:
a wiring line length from the first read-out electrode (23) to the second access electrode (61) is equal to a wiring line length from the second read-out electrode (23) to the second access electrode (61).

7. The qubit device of any one of claim 1 to claim 6, wherein:
the first relay substrate (40A) includes a capacitor that forms capacitive coupling between qubits provided to mutually different qubit substrates mounted to the same face of the first relay substrate (40A).

8. The qubit device of any one of claim 1 to claim 7, wherein:
the first relay substrate (40A) further includes a second control line (46B) that is connected to the second control electrode (21) and transmits a control signal to control the second qubit (1).

9. The qubit device of any one of claim 1 to claim 7, further comprising:
a second relay substrate 40B including a second control line (46B) that is connected to the second control electrode (21) and transmits a control signal that controls the second qubit (1).

10. A fabrication method that fabricates a qubit device including a first qubit substrate (30A), a second qubit substrate (30B), and a first relay substrate (40A) including a first face and a second face provided between the first qubit substrate (30A) and the second qubit substrate (30B), the fabrication method comprising:
joining the first qubit substrate (30A) and the first face of the first relay substrate (40A) together; and
joining the second qubit substrate (30B) and the second face of the first relay substrate (40A) together, wherein:
the first qubit substrate (30A) includes a first qubit (1), a first control electrode (21), and a first read-out electrode (23);
the second qubit substrate (30B) includes a second qubit (1), a second control electrode (21), and a second read-out electrode (23);
the first relay substrate (40A) includes
a first control line (46A) that transmits a control signal that controls the first qubit (1),
a read-out line (48) that transmits a response signal indicating a state of the first qubit (1) or the second qubit (2),
a first access electrode (60A) connected to the first control line (46A), and
a second access electrode (61) connected to the read-out line (48);
the first control electrode (21) and the first control line (46A) are connected; and
both the first read-out electrode (23) and the second read-out electrode (23) are connected to the read-out line (48).

11. The fabrication method of claim 10, wherein:
the first relay substrate (40A) includes a capacitor (41) to capacitive couple the first qubit (1) and the second qubit (1) together.

12. The fabrication method of claim 10 or claim 11, wherein:
a size of the first relay substrate (40A) is larger than a size of the first qubit substrate (30A).

13. The fabrication method of claim 12, wherein:
the first access electrode (60A) and the second access electrode (61) are provided to a portion of the first relay substrate (40A) that protrudes further outside than an outer edge of the first qubit substrate (30A) in an in-plane direction.

14. The fabrication method of any one of claim 10 to claim 13, wherein:
a wiring line length from the first read-out electrode (23) to the second access electrode (61) is equal to a wiring line length from the second read-out electrode (23) to the second access electrode (61).

15. The fabrication method of any one of claim 10 to claim 14, wherein:
the first relay substrate (40A) further includes a second control line (46B) that is connected to the second control electrode (21) and transmits a control signal to control the second qubit (1).
